# EUROPÄISCHE PATENTSCHRIFT

(11) **EP 4 263 644 B1**
(45) Veröffentlichungstag und Bekanntmachung des Hinweises auf die Patenterteilung: **06.08.2025**
(21) Anmeldenummer: 21820290.1
(22) Anmeldetag: 13.12.2021
(51) Int. Cl.: C08G 14/06, C08G 14/10, C08L 61/06, C08L 61/14, C09D 161/06

(54) **MATRIXHARZ FÜR DIE HERSTELLUNG VON FASERVERBUNDWERKSTOFFEN**
MATRIX RESIN FOR THE PRODUCTION OF FIBRE COMPOSITE MATERIALS
RÉSINE À MATRICE POUR LA FABRICATION DE MATÉRIAUX EN FIBRE COMPOSITE

(30) Priorität: 17.12.2020 EP 20214856
(43) Veröffentlichungstag der Anmeldung: 25.10.2023
(73) Patentinhaber: Evonik Operations GmbH, 45128 Essen (DE)
(72) Erfinder: SPRENGER, Stephan, 22113 Oststeinbek (DE); BALTHASAR, Jaclyn, 21483 Basedow (DE)
(74) Vertreter: Evonik Patent Association
(86) Internationale Anmeldenummer: PCT/EP2021/085400
(87) Internationale Veröffentlichungsnummer: WO 2022/128867

(56) Entgegenhaltungen:
- WO-A1-2017/007883
- US-A- 4 990 591
- US-A1- 2019 270 907

## Beschreibung

Die vorliegende Erfindung betrifft Matrixharze für die Herstellung von Faserverbundwerkstoffen.

Glas- oder kohlefaserverstärkte Faserverbundwerkstoffe für höherwertige Anwendungen werden hauptsächlich auf Basis von duroplastischen Harzsystemen hergestellt. Ungesättigte Polyesterharze haben mengenmäßig den größten Marktanteil, gefolgt von Epoxidharzen und Vinylesterharzen. Dabei weisen Faserverbundwerkstoffe auf Basis von Epoxidharzen in der Regel die besten mechanischen Eigenschaften auf, Bauteile auf Basis von ungesättigten Polyesterharzen die schlechtesten. Allerdings sind ungesättigte Polyesterharze preiswerter als Epoxidharze und einfacher zu verarbeiten, da sie mit Peroxiden vernetzt werden. Vinylesterharze stellen sowohl hinsichtlich Leistungsfähigkeit, Verarbeitbarkeit und der Kosten einen Kompromiss dar.

Diese duroplastischen Harzsysteme beruhen sämtlich auf ölbasierten Rohstoffen; Polyesterharze und Vinylesterharze enthalten außerdem größere Mengen Styrol, ein arbeitshygienisch nicht unbedenklicher Stoff.

Seit langem sucht man daher nach biobasierten Matrixharzen, die einfach zu verarbeiten sind, gute mechanische Eigenschaften aufweisen und preislich akzeptabel sind. Die bisher verfügbaren Harzsysteme werden diesen Anforderungen jedoch nicht gerecht - als Beispiel sei hier Polyfurfurylalkohol genannt. Polyfurfurylalkohol vernetzt unter Wasserabspaltung und wird sehr schnell hochviskos. Ein mittels Infusion verarbeitbares, dünnflüssiges Polyfurfurylalkohol-Harz enthält in der Regel sehr viel Wasser. Beim Härten dieses Harzes entstehen Blasen. Zudem sind entsprechende Duroplaste bzw. Faserverbundwerkstoffe sehr porös.

Biobasierte reaktive Materialien sind schon lange bekannt, sowohl im Bereich der Epoxidchemie (z.B. epoxidierte Sojaöle oder epoxidiertes Cashewnussschalenöl) als auch im Bereich der Polyesterchemie (z.B. Cardanol, gewonnen aus Cashewnussschalenöl, Kolophoniumharze oder ungesättigte Ölsäuren). Häufig werden diese nur als Formulierungsbestandteile eingesetzt, da sie in reiner Form zu Polymeren mit schlechten mechanischen Eigenschaften führen.

Vanillin wird inzwischen großtechnisch sehr preiswert aus Lignin, einem Abfallprodukt der Papierindustrie, hergestellt. 2014 waren es bereits mehr als 17000 Tonnen. Vanillin wird bekanntermaßen als Aromastoff in der Lebensmittelindustrie eingesetzt und ist somit nicht toxisch. Auch methacryliertes Vanillin (Vanillinmethacrylat) ist bekannt. Sowohl seine Herstellung als auch seine Verwendung in Kompositen oder im 3D-Druck sind beispielsweise in Stanzione III et al., "Vanillin-based resin for use in composite applications", Green Chem., 2012, 14, 2346-2352 beziehungsweise Bassett et al." Vanillin-Based Resin for Additive Manufacturing", ACS Sustainable Chem. Eng. 2020, 8, 5626-5635 vorbeschrieben.

Im Bereich der Faserverbundwerkstoffe zeigen sich nun aber bei der Verwendung von methacryliertem Vanillin zwei Probleme. Zum einen kann methacryliertes Vanillin nicht ohne weiteres in typischen Faserverbundbetrieben verarbeitet werden, da es sich um einen Feststoff handelt. Zwar lässt sich methacryliertes Vanillin in solchen Acrylatmonomeren, die häufig als Reaktivverdünner verwendet werden, wie z.B. 1,6-Hexandioldiacrylat (HDDA), lösen, sobald man diese Lösung jedoch mit dem für die Verarbeitung notwendigen Härter und Beschleuniger mischt, kristallisiert das methacrylierte Vanillin wieder aus und macht eine weitere Verarbeitung unmöglich. Zum anderen ist ausgehärtetes methacryliertes Vanillin sehr spröde und als Matrixharz für Faserverbundwerkstoffe daher ungeeignet.

Aus dem Stand der Technik sind auch Mischungen von methacryliertem Vanillin mit acryliertem, epoxidiertem Sojaöl bekannt, wie z.B. aus Zhang, C. et al. "Biorenewable Polymers based on acrylated epoxidized soybean oil and methacrylated vanillin", Materials Today Communications 5 (2015) 18-22*.* Die mechanischen Eigenschaften der ausgehärteten Mischungen sind jedoch für die Herstellung von Faserverbundbauteilen nicht ausreichend.

Versuche seitens der Erfinder haben gezeigt, dass Mischungen von methacryliertem Vanillin und Cardanol, welches wie bereits erwähnt, im Bereich der Polyesterchemie häufig Anwendung findet, nicht lagerstabil sind. Es kommt ebenfalls zur Auskristallisation des methacrylierten Vanillins.

Versuche der Erfinder haben weiterhin gezeigt, dass Mischungen von methacryliertem Vanillin, Cardanol und Acrylatmonomeren, wie z.B. HDDA, als Reaktivverdünner zwar eine bessere Lagerstabilität aufzuweisen scheinen, beim Mischen mit Härter und Beschleuniger tritt jedoch ebenfalls wieder eine spontane Kristallisation auf und macht die Verarbeitung unmöglich. JS 4 990 591 A offenbart eine Zusammensetzung enthaltend ein Aldehyd, eine phenolische Verbindung und Aminoethylpiperazin als Diamin, sowie Acrylsäure. US 4 990 591 A bezieht sich auf lagerstabile Harze (Spalte 10, Zeile 59 bis Spalte 11, Zeile 27).

Aufgabe der vorliegenden Erfindung war es daher, zumindest einen der vorgenannten Nachteile zu überwinden.

Überraschenderweise wurde nun gefunden, dass eine Zusammensetzung, enthaltend
- mindestens ein Aldehyd (A),
- mindestens eine phenolische Verbindung (B) und
- mindestens ein Amin (C), das mindestens zwei Aminogruppen ausgewählt aus der Gruppe bestehend aus primären und sekundären Aminogruppen trägt,
wobei mindestens eine dieser Verbindungen mindestens eine (Meth)acrylatgruppe trägt, diese Aufgabe löst.

Diese Zusammensetzung ist vorzugsweise ein Harz, auch Harzsystem genannt, dass zu einem Duroplast ausgehärtet werden kann (ein sogenanntes duroplastisches Harzsystem), wobei dieses Harz ein für die Herstellung von Verbundwerkstoffen, insbesondere Faserverbundwerkstoffen, sehr günstiges Eigenschaftsprofil zeigt. Das Harz ist lagerstabil, es weist eine niedrige Viskosität auf und kann problemlos mit gängigen Härtern und Beschleunigern gemischt und weiterverarbeitet werden. Das Harz weist nach Zugabe von Härtern und Beschleunigern eine ausreichend lange Topfzeit (Verarbeitungszeit) von ca. 4 Stunden aus, was in der Praxis außerordentlich wichtig ist. Das Harz kann bei moderaten Temperaturen von 40 °C bis 100 °C, z.B. 60 °C, vorgehärtet werden. Das Harz weist nach einer Nachhärtung bei einer Temperatur von >100 °C bis 200 °C, z.B. 140 °C, sehr gute mechanische Eigenschaften auf und ist nicht spröde. Es eignet sich damit hervorragend für die Herstellung von Duroplasten und Faserverbundwerkstoffen.

Ein erster Gegenstand der Erfindung ist daher eine Zusammensetzung, enthaltend
- mindestens ein Aldehyd (A),
- mindestens eine phenolische Verbindung (B) und
- mindestens ein Amin (C), das mindestens zwei Aminogruppen ausgewählt aus der Gruppe bestehend aus primären und sekundären Aminogruppen trägt,
wobei mindestens eine dieser Verbindungen mindestens eine (Meth)acrylatgruppe trägt.

Ein weiterer Gegenstand der Erfindung ist eine faserverstärkte Zusammensetzung, enthaltend
- mindestens ein Fasermaterial, vorzugsweise aus einem oder mehreren nachwachsenden Rohstoff(en), und
- die erfindungsgemäße Zusammensetzung.

Noch ein weiterer Gegenstand der Erfindung ist ein Verfahren zur Aushärtung der erfindungsgemäßen Zusammensetzung oder der erfindungsgemäßen faserverstärkten Zusammensetzung, dadurch gekennzeichnet, dass die Aushärtung über einen radikalischen und einen nichtradikalischen Härtungsmechanismus erfolgt, und vorzugsweise folgende Schritte umfasst:
(i) eine thermische Vorhärtung bei einer Temperatur von 40 °C bis 100 °C, insbesondere über einen Zeitraum von 1 h bis 8 h, und/oder eine photochemische Vorhärtung durch aktinische Strahlung, insbesondere UV-Licht;
(ii) eine thermische Nachhärtung bei einer Temperatur von >100 °C bis 200 °C, insbesondere über einen Zeitraum von 1 h bis 8 h.

Noch ein weiterer Gegenstand der Erfindung ist ein Faserverbundwerkstoff bzw. Duroplast erhältlich durch das erfindungsgemäße Verfahren.

Vorteilhafte Ausgestaltungen der Erfindung sind in den nachgeordneten Ansprüchen, den Beispielen und der Beschreibung angegeben. Darüber hinaus wird ausdrücklich darauf hingewiesen, dass die Offenbarung zu den Gegenständen der vorliegenden Erfindung alle Kombinationen von einzelnen Merkmalen der vorliegenden bzw. nachfolgenden Beschreibung der Erfindung und der Patentansprüche miteinschließt. Insbesondere gelten Ausführungsformen eines erfindungsgemäßen Gegenstands *mutatis mutandis* auch für die Ausführungsformen der anderen erfindungsgemäßen Gegenstände.

Die erfindungsgemäßen Gegenstände und ihre bevorzugten Ausführungsformen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei Normaldruck. Unter Normaldruck wird ein Druck von 101325 Pa verstanden.

Der Wortbestandteil "(meth)acryl" steht für "methacryl" und/oder "acryl". Entsprechend steht der Begriff "(Meth)acrylatgruppe" für eine Methacrylatgruppe und/oder eine Acrylatgruppe. Unter einer Methacrylatgruppe wird dabei eine Methacrylsäureestergruppe verstanden und unter einer Acrylatgruppe eine Acrylsäureestergruppe.

Wie oben bereits erläutert, enthält die erfindungsgemäße Zusammensetzung
- mindestens ein Aldehyd (A),
- mindestens eine phenolische Verbindung (B) und
- mindestens ein Amin (C), das mindestens zwei Aminogruppen ausgewählt aus der Gruppe bestehend aus primären und sekundären Aminogruppen trägt,
wobei mindestens eine dieser Verbindungen mindestens eine (Meth)acrylatgruppe trägt.

Die (Meth)acrylatgruppe ist für den radikalischen Härtungsmechanismus erforderlich. Der Aldehyd (A), die phenolische Verbindung (B) und das Amin (C) sind zudem für den nichtradikalischen Härtungsmechanismus erforderlich, der, ohne an eine Theorie gebunden zu sein, über eine Betti-Reaktion / Mannich-Reaktion verläuft.

Es ist bevorzugt, dass mindestens eine der Verbindungen (A), (C) und (B) aus nachwachsenden Rohstoffen hergestellt wird oder ein nachwachsender Rohstoff ist. Es ist insbesondere bevorzugt, dass mindestens ein Aldehyd (A) und eine phenolische Verbindung (B) aus nachwachsenden Rohstoffen hergestellt werden und/oder nachwachsende Rohstoffe sind. Je nach Zusammensetzung der Mischung kann beispielsweise ein Massenanteil an biobasierten Rohstoffen zwischen 75-96 % bezogen auf die Gesamtmasse der Zusammensetzung erreicht werden.

Es ist bevorzugt, dass mindestens ein oder alle Aldehyde (A) mindestens eine (Meth)acrylatgruppe tragen. Es ist außerdem bevorzugt, dass mindestens ein oder alle Aldehyde (A) aromatisch sind. Es ist daher ebenfalls bevorzugt, dass mindestens ein oder alle Aldehyde (A) aromatisch sind und mindestens eine (Meth)acrylatgruppe tragen. Es ist weiter bevorzugt, dass mindestens ein Aldehyd (A) (meth)acryliertes Vanillin (Vanillin(meth)acrylat) ist. Es ist insbesondere bevorzugt, dass als Aldehyd (A) ausschließlich (meth)acryliertes Vanillin (Vanillin(meth)acrylat) verwendet wird. Die Begriffe "(meth)acryliertes Vanillin" und "Vanillin(meth)acrylat" werden im Rahmen der vorliegenden Erfindungen synonym verwendet. Es handelt sich bei "(meth)acryliertem Vanillin" bzw. "Vanillin(meth)acrylat" um 4-(Meth)acryloxy-3-methoxybenzaldehyd, dem (Meth)acrylsäureester von 4-Hydroxy-3-methoxybenzaldehyd (Vanillin). Methacryliertes Vanillin (Vanillinmethacrylat, 4-Methacryloxy-3-methoxybenzaldehyd)hat eine Struktur gemäß der Formel (I): 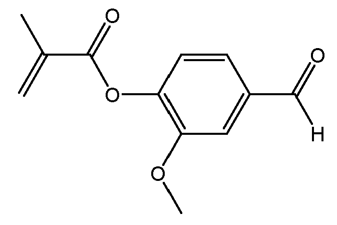 Acryliertes Vanillin (Vanillinacrylat, 4-Acryloxy-3-methoxybenzaldehyd) hat entsprechend eine Struktur wie in Formel (II) dargestellt:

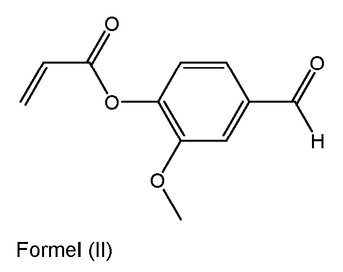

Es ist insbesondere bevorzugt, dass der mindestens eine Aldehyd (A) methacryliertes Vanillin (Vanillinmethacrylat, 4-Methacryloxy-3-methoxybenzaldehyd) ist oder umfasst. Diese Verbindung ist beispielsweise unter der Bezeichnung Visiomer^{®} VALMA von Evonik erhältlich.

Die erfindungsgemäße Zusammensetzung enthält weiterhin mindestens eine phenolische Verbindung (B). Unter einer phenolischen Verbindung wird hierbei eine Verbindung verstanden, die an einem oder mehreren aromatischen Systemen, die auch als aromatische Ringsysteme bezeichnet werden, eine oder mehrere Hydroxygruppen trägt. Diese Hydroxygruppen sind also jeweils an ein Kohlenstoffatom gebunden, das wiederum Teil eines aromatischen Systems ist. Das einfachste Beispiel für eine phenolische Verbindung ist Phenol (Hydroxybenzol).

Es ist bevorzugt, dass mindestens eine oder alle phenolischen Verbindungen (B) ethylenisch ungesättigte Verbindungen sind. Unter einer ethylenisch ungesättigten Verbindung wird hierbei eine Verbindung verstanden, die mindestens eine C=C-Doppelbindung enthält, die nicht Teil eines aromatischen Systems ist. Es ist also bevorzugt, dass die phenolische Verbindung (B) mindestens eine C=C-Doppelbindung, die nicht Teil eines aromatischen Systems ist, enthält. Ohne an eine Theorie gebunden zu sein, wird vermutet, dass die C=C-Doppelbindungen zumindest zum Teil am radikalischen Härtungsmechanismus beteiligt sind.

Es ist besonders bevorzugt, dass mindestens eine oder alle phenolischen Verbindungen (B) Cardanole sind. Cardanole sind phenolische Verbindungen, die durch Decarboxylierung von Anacardsäuren gewonnen wird. Anacardsäuren sind wiederum der Hauptbestandteil der Cashewnussschalenflüssigkeit bzw. des Cashewnussschalenöls, dass wiederum ein Nebenprodukt der Cashewnussverarbeitung ist. Im Rahmen der vorliegenden Erfindung werden unter Anacardsäuren Verbindung der Formel (III) und unter Cardanolen Verbindungen der Formel (IV) verstanden, 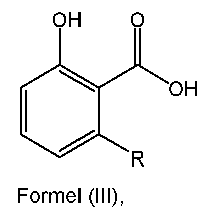 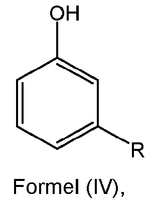 wobei R jeweils unabhängig voneinander ein gesättigter oder ungesättigter Kohlenwasserstoffrest ist.

Die Anacardsäuren des Cashewnussschalenöls und entsprechend die daraus erhältlichen Cardanole weisen in der Regel einen Kohlenwasserstoffrest R mit 15 Kohlenstoffatomen auf, wobei der Sättigungsgrad variieren kann. Das aus dem Cashewnussschalenöl gewonnene Cardanol enthält ca. 41% dreifach ungesättigtes Cardanol, ca. 34% einfach ungesättigtes Cardanol, ca. 22% zweifach ungesättigtes Cardanol und ca 2% gesättigtes Cardanol, jeweils angegeben in Massenprozent bezogen auf die Gesamtmasse der Cardanole.

Es ist daher bevorzugt, dass der Rest R in Formel (III) bzw. (IV) ein Kohlenwasserstoffrest mit 15 Kohlenstoffatomen ist. Es ist weiterhin bevorzugt, dass der Rest R in Formel (III) bzw. (IV) keine, eine, zwei oder drei C=C-Doppelbindungen aufweist.

Es ist also insbesondere bevorzugt, dass der Rest R in Formel (III) und (IV) jeweils unabhängig voneinander ein Rest mit 15 Kohlenstoffatomen ist und keine, eine, zwei oder drei C=C-Doppelbindungen aufweist.

Da die C=C-Doppelbindungen radikalisch polymerisieren können, ist es weiterhin bevorzugt, dass der Rest R jeweils unabhängig voneinander ein Rest mit mindestens einer C=C-Doppelbindung ist.

Es ist also bevorzugt, dass der Rest R jeweils unabhängig voneinander ein Rest mit mindestens einer C=C-Doppelbindung und/oder mit 15 Kohlenstoffatomen ist, insbesondere ein Rest mit mindestens einer C=C-Doppelbindung und mit 15 Kohlenstoffatomen.

Die Anarcadasäure, die der Namensgeber der Gruppe der Anarcardsäuren ist und den Hauptbestandteil der Anacardsäuren im Cashewnussschalenöl darstellt, weist beispielsweise einen Rest R der Formel (V) auf. 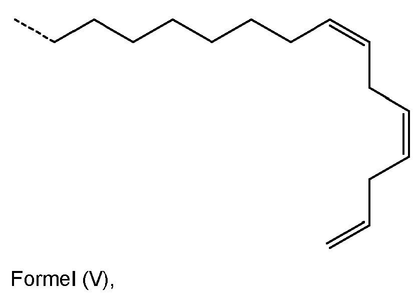 wobei die gestrichelte Linie die kovalente Bindung zum Benzolring darstellt. Bevorzugt ist R in Formel (III) und (IV) daher ein Rest der Formel (V). Ebenfalls bevorzugt sind solche Reste R, die sich von einem Rest der Formel (V) (formal) durch Hydrierung/Sättigung einer, zweier oder aller drei C=C-Doppelbindung ableiten.

Cardanole sind kommerziell erhältlich. Besonders bevorzugt ist Cardanol NX-2026 (Cardolite), ein zweifach ungesättigtes Cardanol der Formel (VI) mit R = -C₇H₁₄-CH=CH-CH₂-CH=CH-C₃H₇. Bevorzugt ist R in Formel (III) und (IV) R = -C₇H₁₄-CH=CH-CH₂-CH=CH-C₃H₇.

Die erfindungsgemäße Zusammensetzung enthält weiterhin mindestens ein Amin (C), das mindestens zwei Aminogruppen ausgewählt aus der Gruppe bestehend aus primären und sekundären Aminogruppen trägt. Primäre oder sekundäre Aminogruppen sind für eine Mannich-Reaktion bzw. Betti-Reaktion notwendig. Tertiäre Aminogruppen können in einer Mannich-Reaktion bzw. Betti-Reaktion dagegen nicht umgesetzt werden.

Vorzugsweise enthält die erfindungsgemäße Zusammensetzung mindestens ein Amin (C), das mindestens zwei primäre Aminogruppen trägt.

Es ist weiterhin bevorzugt, dass das Amin (C) aromatisch ist. Aromatische Amine sind Amine, die eine oder mehrere Aminogruppe(n) tragen, die jeweils an ein Kohlenstoffatom gebunden ist, das wiederum Teil eines aromatischen Systems ist. Das einfachste Beispiel für ein aromatisches Amin ist Anilin (Phenylamin, Aminobenzol).

Es ist weiter bevorzugt, dass das Amin (C) ein Dianilin ist. Unter einem Dianilin wird eine Verbindung verstanden, die zwei Aminophenylreste trägt, insbesondere zwei 4-Aminophenylreste. Die Aminogruppen sind dabei erfindungsgemäß ausgewählt aus der Gruppe der primären und sekundären Aminogruppen. Besonders bevorzugt ist das Amin (C) daher ein Dianilin mit primären Aminogruppen.

Es ist weiterhin bevorzugt, dass mindesten ein Amin (C) ausgewählt ist aus der Gruppe bestehend aus substituierten oder unsubstituierten 4,4'-Isopropylidendianilinen und substituierten oder unsubstituierten 4,4'-Methylendianilinen und substituierten oder unsubstituierten 4,4'-Sulfonyldianilinen, vorzugsweise aus der Gruppe bestehend aus 4,4'-Methylenbis(2,6-diethylanilin), 4,4'-Methylenbis(2,6-diisopropyl-anilin) und 4,4'-Diaminodiphenylsulfon. Besonders bevorzugt ist mindestens ein Amin (C) 4,4'-Diaminodiphenylsulfon.

Dianiline sind kommerziell verfügbar. So sind 4,4'-Methylenbis(2,6-diethyl-anilin) beispielsweise unter der Bezeichnung Lonzacure^{®} M-DEA (Lonza), 4,4'-Methylenbis(2,6-diisopropyl-anilin) unter der Bezeichnung Lonzacure^{®} M-DIPA (Lonza) und 4,4'-Diaminodiphenylsulfon unter der Bezeichnung Aradur^{®} 976-1 (Huntsman) kommerziell erhältlich.

Es ist bevorzugt, dass die erfindungsgemäße Zusammensetzung zusätzlich mindestens ein (Meth)acrylat (D) enthält. Unter einem (Meth)acrylat wird hierbei eine Verbindung verstanden, die eine oder mehrere (Meth)acrylatgruppe(n) trägt, also eine oder mehrere Methacrylsäureestergruppe(n) und/oder Acrylsäureestergruppe(n). Das (Meth)acrylat (D) dient als Reaktivverdünner und/oder Vernetzer (Crosslinker). Als Reaktivverdünner kann das (Meth)acrylat (D) eine oder mehrere (Meth)acrylatgruppe(n) aufweisen. Als Vernetzer muss das (Meth)acrylat (D) mindestens zwei (Meth)acrylatgruppen tragen. Soll das (Meth)acrylat (D) sowohl als Reaktivverdünner als auch als Vernetzer eingesetzt werden, ist es daher erforderlich, dass das (Meth)acrylat (D) mindestens zwei (Meth)acrylatgruppen aufweist. Es ist daher bevorzugt, dass mindestens ein oder alle (Meth)acrylate (D) mindestens zwei (Meth)acrylatgruppen tragen. Es ist weiterhin bevorzugt, dass mindestens ein oder alle (Meth)acrylate (D) zwei bis sechs (Meth)acrylatgruppen tragen. Vorzugweise besteht das (Meth)acrylat (D) nur aus den Elementen Kohlenstoff, Wasserstoff, Sauerstoff und Stickstoff, insbesondere nur aus den Elementen Kohlenstoff, Wasserstoff, Sauerstoff. Geeignete (Meth)acrylate (D) sind in *European Coatings Tech Files,* Patrick Glöckner et al. "Strahlenhärtung: Beschichtungen und Druckfarben", 2008, Vincentz Network, Hannover, Deutschland beschrieben.

Vorzugsweise ist mindestens ein (Meth)acrylat (D) ausgewählt aus der Gruppe bestehend aus Trimethylolpropantriacrylat (TMPTA), Tripropylenglykoldiacrylat (TPGDA), Dipropylenglykoldiacrylat (DPGDA), Isobornylacrylat (IBOA), Laurylacrylat, Dodecylacrylat, 1,6-Hexandioldiacrylat (HDDA), Tridecylacrylat, Pentaerithritoltriacrylat, Polyethylenglykoldiacrylat und ihre ethoxylierten und / oder propoxylierten Derivaten.

Es ist ebenfalls bevorzugt, dass mindestens ein (Meth)acrylat (D) ausgewählt ist aus der Gruppe bestehend aus den (Meth)acrylsäureestern von Vanillylalkohol (4-Hydroxy-3-methoxybenzylalkohol)), Guajacol, Creosol, wie sie z.B. von Holmberg, A.L. et al. in "Softwood Lignin-Based Methacrylate Polymers with Tunable Thermal and Viscoelastic Properties", Macromolecules 2016, 49, 1286-1295) beschrieben werden. Bei diesen Verbindungen handelt es sich - ebenso wie auch bei (meth)acryliertem Vanillin - um Verbindungen, die aus Lignin als nachwachsendem Rohstoff hergestellt werden.

Geeignete (Meth)acrylate (D) sind kommerziell erhältlich unter der Bezeichung Ebecryl^{®} TMPTA (Allnex SA, Deutschland), Ebecryl^{®} OTA480 (ein propoxyliertes Glyceryltriacrylat, Allnex SA, Deutschland), Ebecryl^{®} TPGDA (Allnex SA, Deutschland), Ebecryl^{®} DPGDA (Allnex SA, Deutschland), Ebecryl^{®} 892 (Allnex SA, Deutschland), Ebecryl^{®} 11 (ein Polyethylenglykoldiacrylat, Allnex SA, Deutschland), Ebecryl^{®} 45 (Allnex SA, Deutschland), PETIA (eine Mischung aus Pentaerythritoltri- und tetraacrylat, Allnex SA, Deutschland), Ebecryl^{®} 150 (ein Diacrylat basierend auf Bisphenol A, Allnex SA, Deutschland), Ebecryl^{®} 605 (eine Mischung von 80% Bisphenol-A-Diepoxyacrylat and 20% TPGDA, Allnex SA, Deutschland), Ebecryl^{®} 40 (ein ethoxyliertes und propoxyliertes Pentaerythritoltetraacrylat, Allnex SA, Deutschland), Laromer^{®} TMPTA (BASF, Deutschland), Miramer^{®} M200 (HDDA, Rahn AG, Deutschland), Miramer^{®} M220 (TPGDA, Rahn AG, Deutschland), Miramer^{®} 3130 (ein ethoxyliertes Trimethylolpropantriacrylat, Rahn AG, Deutschland), SR 415 (ein ethoxyliertes Trimethylolpropantriacrylat, Sartomer, Frankreich), SR 489 (Tridecylacrylat, Sartomer, Frankreich) und Sarbio^{®} 5101 (Dodecylacrylat, Arkema, Frankreich).

Geeignete (Meth)acrylate (D) sind ebenfalls von Evonik Operations GmbH (Deutschland) unter der VISIOMER^{®} Produktlinie kommerziell erhältlich. Bevorzugte Verbindungen sind Glycerolformalmethacrylat (VISIOMER^{®} GLYFOMA), Diurethandimethacrylat (VISIOMER^{®} HEMA TMDI), Butyldiglycolmethacrylat (VISIOMER^{®} BDGMA), Polyethylenglycol-200-Dimethacrylat (VISIOMER^{®} PEG200DMA), Trimethylolpropanmethacrylat (VISIOMER^{®} TMPTMA), Tetrahydrofurfurylmethacrylat (VISIOMER^{®} THFMA), Isobornylmethacrylat (VISIOMER^{®} Terra IBOMA), Isobornylacrylat (VISIOMER^{®} IBOA), ein Methacrylsäureester von Fettalkoholen mit im Mittel 13,0 Kohlenstoffatomen (VISIOMER^{®} Terra C13-MA) oder mit im Mittel 17,4 Kohlenstoffatomen (VISIOMER^{®} Terra C17.4-MA).

Besonders bevorzugt enthält die Zusammensetzung mindestens ein (Meth)acrylat (D) ausgewählt aus der Gruppe der Diol- und Triolbasierten di- und trifunktionellen Acrylate, insbesondere 1,6-Hexandioldiacrylat (HDDA).

Es ist bevorzugt, dass die erfindungsgemäße Zusammensetzung weiterhin mindestens einen Initiator (E) enthält.

Der Initiator (E) der erfindungsgemäßen Zusammensetzung ist eine Verbindung, die Radikale bildet, wenn sie einem externen Auslöser ausgesetzt wird. Bei diesem Auslöser kann es sich um aktinische Strahlung, vorzugsweise UV-Licht und/oder sichtbarem Licht, oder Wärme handeln. Dementsprechend kann es sich bei den Initiatoren (E) um Initiatoren für eine photochemische radikalische Härtung bzw. Polymerisation (Photoinitiatoren) und/oder um Initiatoren für die thermische radikalische Härtung bzw. Polymerisation (thermische Initiatoren) handeln.

Als thermische Initiatoren werden vorzugsweise organische Peroxide eingesetzt, wie z.B. 2,5-Bis(tert-butylperoxy)-2,5-dimethylhexan (z.B. LUPEROX 101^{®}), Dilauroylperoxid (z.B. LUPEROX LP^{®}), Dibenzoylperoxid (z.B. LUPEROX A98^{®}) und Bis(tert-butyldioxyisopropyl)benzol (z.B. VulCUP R^{®}) von Arkema (Frankreich) oder Peroxan BP-Pulver 50 W von Pergan GmbH (Deutschland), einem Pulver enthaltend ca. 40-50 Gew.% Dibenzoylperoxid und ca. 40-50 Gew.-% Dicyclohexylphthalat. Bevorzugte thermische Initiatoren sind weiterhin Ketonperoxide wie Methylethylketonperoxid, Diacylperoxide wie Benzoylperoxid, Hydroperoxide wie Cumolhydroperoxid sowie Peroxyketale, Dialkylperoxide, Peroxydicarbonate und Peroxyester, sowie anorganische Peroxide wie Peroxydisulfate, einschließlich Natriumpersulfat (Na₂S₂O₈), Kaliumpersulfat (K₂S₂O₈), und Ammoniumpersulfat ((NH₄)₂S₂O₈), und ferner auch Azobisisobutyronitril (AIBN).

Als Photoinitiatoren eignen alle dem Fachmann bekannten Photoinitiatoren, darunter Norrish-Typ-I- und Norrish-Typ-II-Photoinitiatoren. Dies schließt die üblicherweise verwendeten UV-Photoinitiatoren, wie Acetophenone (z.B. Diethoxyacetophenon) und Phosphinoxide (z.B. Diphenyl-(2,4,6-trimethylbenzoyl)-phosphinoxid, Phenyl-bis-(2,4,6-trimethylbenzoyl)-phosphinoxid (PPO) und Bis-(2,4,6-trimethylbenzoyl)-phenylphosphinoxid)) mit ein. Besonders bevorzugt sind Photoinitiatoren vom Norrish-Typ-1, wie beispielsweise Benzophenon, Benzoin, α-Hydroxyalkylphenon, Acylphosphinoxid oder Derivate davon. Geeignete Photoinitiatoren sind beispielsweise in *"*A Compilation of Photoinitiators Commercially available for UV today" (K. Dietliker, SITA Technology Ltd., London 2002) beschrieben.

Es ist bevorzugt, dass die erfindungsgemäße Zusammensetzung weiterhin mindestens einen Beschleuniger (F) enthält.

Für den Fall, dass die Zusammensetzung einen thermischen Initiator enthält, ist es bevorzugt, dass ein Beschleuniger (F) enthalten ist, der diese radikalische thermische Härtung beschleunigt. Beispiele dafür sind organische Säuremetallsalze, wie Kobaltnaphthenat, und tertiäre aromatische Amine, vorzugsweise tertiäre aromatische Amine wie N,N-Dimethylanilin, N,N-Diethylanilin, N,N-Dimethylparatoluidin.

Für den Fall, dass die Zusammensetzung einen Photoinitiator enthält, ist es bevorzugt, dass ein Beschleuniger (F) enthalten ist, der diese photochemische radikalische Härtung beschleunigt. Ein solcher Beschleuniger wird auch als Photosensibilisator bezeichnet. Beispiele dafür sind Amine wie n-Butylamin, Triethylamin, N-Methyldiethanolamin, Piperidin, N,N-Dimethylanilin und Triethylentetramin, Schwefelverbindungen wie S-Benzylisothiuronium-p-toluolsulfinat, wie z N,N-Dimethyl-p-aminobenzonitril und Phosphorverbindungen wie Natriumdiethylthiophosphat.

Es ist besonders bevorzugt, dass die erfindungsgemäße Zusammensetzung als Beschleuniger (F) mindestens ein tertiäres Amin, vorzugsweise mindestens ein tertiäres aromatisches Amin, insbesondere N,N-Diethylanilin enthält. N,N-Diethylanilin ist kommerziell beispielsweise in Lösung erhältlich unter der Bezeichnung PERGAQUICK A3X von Pergan GmbH (Deutschland). Die Lösung enthält dabei ca. 5-10 Gew.% N,N-Diethylanilin und ca. 80-90 Gew.% 1-Isopropyl-2,2-dimethyltrimethylendiisobutyrat.

Es ist bevorzugt, dass die erfindungsgemäße Zusammensetzung weiterhin mindestens einen weiteren Zusatzstoff (G) enthält. Beim Zusatzstoff (G) handelt es sich vorzugsweise um einen Stoff, mit dem sich die Eigenschaften der nichtausgehärteten oder ausgehärteten Zusammensetzung gezielt einstellen lassen. Es kann sich dabei um beispielsweise um Farbstoffe, Pigmente, Rheologiemmittel und Schlagzähmodifizierer aber auch um nanoskalige Füllstoffe handeln, die sich mittels Infusions- und Injektionsverfahren verarbeiten lassen. Beispiele hierfür sind acrylatfunktionelle Acrylnitril-Butadien-Copolymere wie z.B. Hypro^{®} VTBNX 1300x43 der Frma Huntsman, Tegomer^{®} M-Si 2650 der Firma Evonik Operations, Nanosilica und Nanoaluminate.

Es ist bevorzugt, dass die erfindungsgemäße Zusammensetzung, jeweils bezogen auf die Gesamtmasse der Zusammensetzung, folgende Bestandteile enthält oder aus ihnen besteht:
- ein oder mehrere Aldehyd(e) (A) in einem Massenanteil von insgesamt 60% bis 90%, vorzugsweise 65% bis 85%, insbesondere 70% bis 80%;
- eine oder mehrere phenolische Verbindung(en) (B) in einem Massenanteil von insgesamt 1% bis 25%, vorzugsweise 3% bis 20%, insbesondere 5% bis 15%;
- ein oder mehrere Amin(e) (C) in einem Massenanteil von insgesamt 1% bis 20%, vorzugsweise von 2% bis 10%, insbesondere von 3% bis 5%;
- ein oder mehrere (Meth)acrylat(e) (D) in einem Massenanteil von insgesamt 1% bis 25%, vorzugsweise 3% bis 20%, insbesondere 5% bis 15%;
- ein oder mehrere Initiator(en) (E) in einem Massenanteil von insgesamt 0,1% bis 5%, vorzugsweise von 0,2% bis 4%, insbesondere von 0,3% bis 1%;
- ein oder mehrere Beschleuniger (F) in einem Massenanteil von insgesamt 0% bis 10%, vorzugsweise von 0,01% bis 5%, insbesondere von 0,02% bis 2%;
- ein oder mehrere Zusatzstoff(e) (G) in einem Massenanteil von insgesamt 0% bis 10%, vorzugsweise von 0,01% bis 5%, insbesondere von 0,02% bis 2%.

Die obligatorischen bzw. optionalen Bestandteile der erfindungsgemäße Zusammensetzung, also Aldehyde (A), phenolische Verbindungen (B), Amine (C), (Meth)acrylate (D), Initiatoren (E), Beschleuniger (F) und Zusatzstoffe (G), sind alle voneinander unterschiedlich. Für den Fall, dass eine Verbindung prinzipiell zwei oder mehr der vorgenannten Gruppen (A), (B), (C), (D), (E), (F) und (G) zugeordnet werden, soll diese Verbindung derjenigen in Frage kommenden Gruppe zugeordnet werden, die gemäß der oben angegeben Reihenfolge zuerst genannt wird, sofern nicht explizit von dieser Regel abgewichen wird. Kann eine Verbindung also beispielsweise einer der Gruppen (B), (D) und (G) zugeordnet werden, so soll sie der erstgenannten der in Frage kommenden Gruppen, in diesem Beispiel also (B), zugeordnet werden. Eine Verbindung wird also nicht mehreren der Gruppen (A), (B), (C), (D), (E), (F) und (G) zugeordnet.

Die erfindungsgemäße Zusammensetzung kann in der Elektronik, als Vergussmasse oder in der Stereolithografie (SLA) eingesetzt werden. Die erfindungsgemäße Zusammensetzung eignet aber insbesondere zur Herstellung von faserverstärkten Zusammensetzungen und daraus wiederum hergestellten Faserverbundwerkstoffen.

Ein weiterer Gegenstand der Erfindung ist daher eine faserverstärkte Zusammensetzung, enthaltend
- mindestens ein Fasermaterial, vorzugsweise aus einem oder mehreren nachwachsenden Rohstoff(en), und
- die erfindungsgemäße Zusammensetzung.

Die Fasermaterialien sind bevorzugt Einzelfilamente, Faserbündel enthaltend Einzelfilamente, Fäden enthaltend Einzelfilamente oder Faserbündel. Weiterhin bevorzugt sind die Fasermaterialien Produkte wie Gelege und Gewebe enthaltend Einzelfilamente, Faserbündel oder Fäden. Besonders bevorzugt sind Gelege enthaltend Faserbündel. Im Falle von Geweben sind diese bevorzugt Leinenwebart. Bevorzugte Gelege sind aufgebaut aus Schichten, wobei die Schichten in gleicher Richtung ausgerichtet sein können (uniaxial) oder in unterschiedlichen Richtungen ausgerichtet sein können (multiaxial). Der Vorteil von Gelegen ist, dass die Fasern oder Faserbündel der Schichten nicht durch den Flechtvorgang gebogen sind. Damit steht eine höhere Kraftaufnahmekapazität zur Verfügung. Die Fasermaterialien sind vorzugsweise Glasfaser-, Mineralfaser-, Naturfaser- und/oder Polymerfasermaterialien, bevorzugt Naturfasermaterialien, insbesondere Naturfasern. Noch bevorzugter sind die Fasermaterialien Gelege aus Glasfaser-, Mineralfaser-, Naturfaser- und/oder Polymerfasermaterialien, insbesondere sind die Fasermaterialien Gelege aus Naturfasern. Die Fasermaterialien sind bevorzugt fabrizierte Rohprodukte, als gereinigte Materialien oder bereits beschichtet, bevorzugt werden gereinigte Fasermaterialien verwendet. Die Reinigung erfolgt bevorzugt materialabhängig, ein bevorzugtes Reinigungsverfahren ist eine thermische Behandlung, besonders bevorzugt eine Bestrahlung mit Hilfe eines IR-Strahlers. Gegebenenfalls kann die thermische Behandlung unter Schutzgas erfolgen. Bei diesem Reinigungsschritt wird vor allem das bei der späteren Verarbeitung zum Faserverbund störende, in Naturfasern fast immer enthaltene Wasser entfernt. Es ist bevorzugt, dass das Fasermaterial ausgewählt ist aus der Gruppe bestehend aus Flachsfasern, Hanffasern, Jutefasern, Kenaffasern, Ramiefasern, Sisalfasern und Holzfasern. Die Fasern können durch Ultraschall-Aufschluss gezielt so verändert werden, dass sie durch die standardisierbaren Bearbeitungsprozesse reproduzierbare technische Eigenschaften erhalten.

Die erfindungsgemäße Zusammensetzung und die erfindungsgemäße faserverstärkte Zusammensetzung lassen sich mittels eines speziellen Verfahrens aushärten. Dabei erfolgt die Aushärtung dieser Zusammensetzungen sowohl über einen radikalischen und als auch über einen nichtradikalischen Härtungsmechanismus.

Noch ein weiterer Gegenstand der Erfindung ist daher ein Verfahren zur Aushärtung der erfindungsgemäßen Zusammensetzung oder der erfindungsgemäßen faserverstärkten Zusammensetzung, dadurch gekennzeichnet, dass die Aushärtung über einen radikalischen und einen nichtradikalischen Härtungsmechanismus erfolgt und vorzugsweise folgende Schritte umfasst:
(i) eine thermische Vorhärtung bei einer Temperatur von 40 °C bis 100 °C, insbesondere über einen Zeitraum von 1 h bis 8 h, und/oder eine photochemische Vorhärtung durch aktinische Strahlung, insbesondere UV-Licht;
(ii) eine thermische Nachhärtung bei einer Temperatur von >100 °C bis 200 °C, insbesondere über einen Zeitraum von 1 h bis 8 h.

Vorzugsweise erfolgt dabei die Vorhärtung über einen radikalischen Härtungsmechanismus und die Nachhärtung über einen dem nichtradikalischen Härtungsmechanismus.

Bei dem radikalischen Härtungsmechanismus findet eine radikalische Polymerisation der (Meth)acrylatgruppen und ggf. ethylenisch ungesättigten Doppelbindungen statt. Die radikalische Polymerisation kann thermisch oder photochemisch induziert werden. Die thermische Vorhärtung findet dabei insbesondere bei der Herstellung von Faserverbundwerkstoffen Anwendung, die photochemische Vorhärtung wiederum im Bereich der Stereolithografie.

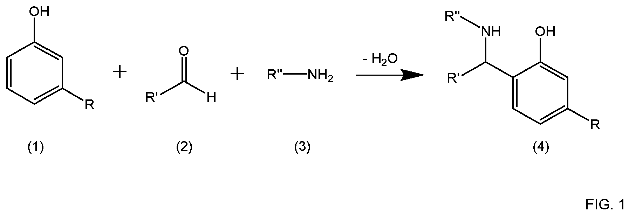

Ohne an eine Theorie gebunden zu sein, wird angenommen, dass es sich bei dem nichtradikalischen Härtungsmechanismus um eine verallgemeinerte Betti-Reaktion handelt, die als ein Spezialfall der Mannich-Reaktion betrachtet werden kann. Die Betti-Reaktion wird beispielsweise in Cardellicchio et al. "The Betti base: the awakening of a sleeping beauty", Tetrahedron: Asymmetry Volume 21, Issue 5, 30 March 2010, Pages 507-517 beschrieben (s.a. https://en.wikipedia.org/wiki/Betti reaction und https://de.wikipedia.org/wiki/Betti-Reaktion). Im vorliegenden Fall wird angenommen, dass der Aldehyd (A), die phenolische Verbindung (B) und das Amin (C) über eine Betti-Reaktion miteinander reagieren. Diese Reaktion ist schematisch in FIG. 1 dargestellt.

Besonders bevorzugt erfolgt die thermische Nachhärtung (ii) bei einer Temperatur von 140 °C bis 150 °C.

Die erfindungsgemäße Zusammensetzung ist vorzugsweise ein stabiles, niedrigviskoses Harz, das mit gängigen Herstellungsverfahren für Faserverbundwerkstoffe verarbeitbar ist. Bevorzugt handelt es sich daher bei dem erfindungsgemäßen Verfahren um ein Injektionsverfahren oder ein Infusionsverfahren (z.B. VARI; das Vakuuminfusionsverfahren). Diese Verfahren sind dem Fachmann bekannt.

Durch erfindungsgemäße Verfahren lassen sich Duroplaste bzw. Faserverbundwerkstoff mit hervorragenden mechanischen Eigenschaften herstellen.

Noch ein weiterer Gegenstand der Erfindung ist daher ein Faserverbundwerkstoff bzw. Duroplast erhältlich durch das erfindungsgemäße Verfahren.

Die erfindungsgemäßen Faserverbundwerkstoffe und Duroplaste finden als Bauteile bzw. Formteile (z.B. als Reinharzplatten, als Faserverbundbauteile etc.) Verwendung im Flugzeugbau, im Schienenfahrzeugbau, Automobilbau, Schiffsbau, Maschinenbau, Anlagenbau, Bauwesen sowie bei der Herstellung von Rotorblättern für Windkraftanlagen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

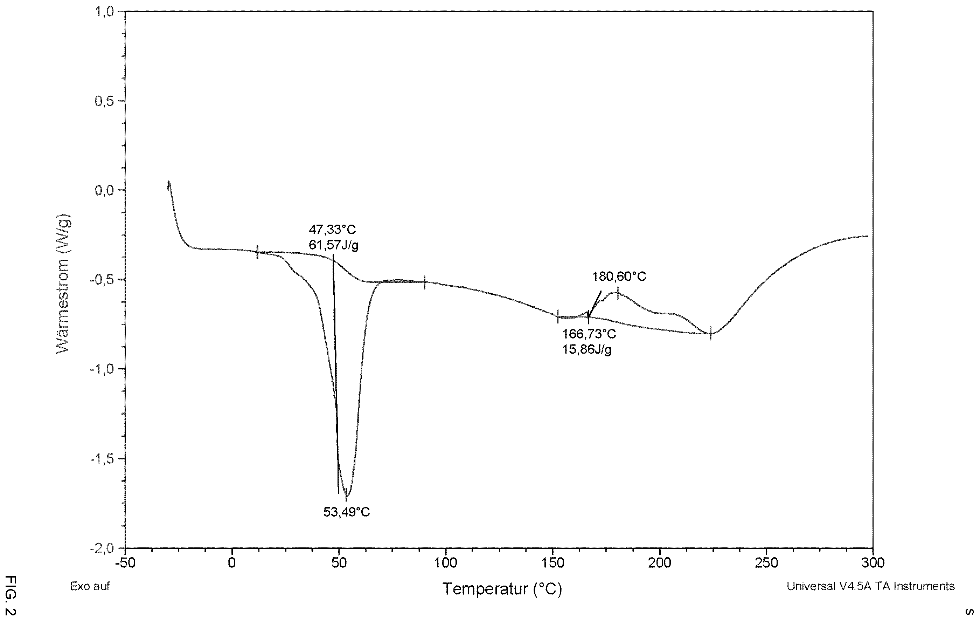

Der Gegenstand der vorliegenden Erfindung wird anhand von FIG. 1 und FIG. 2 näher erläutert, ohne dass der Gegenstand der vorliegenden Erfindung darauf beschränkt sein soll.

FIG. 1 zeigt schematisch eine Kondensationsreaktion (Betti-Reaktion / Mannich-Reaktion) einer phenolischen Verbindung (1), eines Aldehyds (2) und eines Amins (3) unter Bildung einer Betti-Base / Mannich-Base (4) und unter Freisetzung von Wasser.

FIG. 2 zeigt die Ergebnisse der dynamischen Differenzkalorimetrie (DSC) für die erfindungsgemäße Zusammensetzung wie in den Beispielen beschrieben. Es sind zwei Peaks zu erkennen, einer für die radikalische Vorhärtung und einer für die nichtradikalische Nachhärtung.

### Beispiele

### Allgemeine Methoden:

### Glasumwandlungstemperatur/Glasübergangstemperatur (Tg):

Die Glasumwandlungstemperatur/Glasübergangstemperatur (Tg) wird mittels dynamisch-mechanischer Analyse (DMA) gemäß der Norm ISO 6721-11:2019-06 bestimmt.

### Elastizitätsmodul (E):

Der Elastizitätsmodul (E) wird mittels dynamisch-mechanischer Analyse (DMA) gemäß der Norm ISO 6721-4:2019-05 bestimmt.

### Schlagzähigkeit:

Die Schlagzähigkeit wird gemäß der Norm ISO 179-1:2010-11 bestimmt.

### Viskosität:

Die Viskosität wird gemäß der Norm DIN EN ISO 3219:1994-10 bestimmt.

### Biegefestigkeit:

Die Biegefestigkeit wird über einen Dreipunktbiegeversuch gemäß der Norm ISO 178:2019-04 bestimmt.

### Biegemodul:

Der Biegemodul wird über einen Dreipunktbiegeversuch gemäß der Norm ISO 178:2019-04 bestimmt.

### Dynamische Differenz-Thermoanalyse/Dynamische Differenzkalorimetrie (Differential scanning calorimetry, DSC):

Die Dynamische Differenz-Thermoanalyse (DSC) wird gemäß DIN EN ISO 11357-1:2017-02, DIN EN ISO 11357-2:2020-08 und DIN EN ISO 11357-4:2014-10 durchgeführt.

### RohstoffelMaterialien:

| Bezeichnung | Hersteller | Charakterisierung |
|---|---|---|
| Visiomer^{®} VALMA | Evonik Operations GmbH | Methacryliertes Vanillin (Vanillinmethacrylat) |
| Cardanol NX- 2026 | Cardolite | Cardanol (3-pentadeca-dienyl-phenol) |
| HDDA | Allnex | Hexandioldiacrylat |

| Aradur^{®} 976-1 | Huntsman | 4,4'-Diaminodiphenylsulfon |
|---|---|---|
| PEROXAN BP-Pulver 50 W | Pergan GmbH | Pulver enthaltend |
| | | ca. 40-50 Gew.% Dibenzoylperoxid |
| | | ca. 40-50 Gew.-% |
| | | Dicyclohexylphthalat |
| PERGAQUICK A3X | Pergan GmbH | Lösung enthaltend |
| | | ca. 5-10 Gew.% N,N-Diethylanilin |
| | | ca. 80-90 Gew.% 1-Isopropyl-2,2-dimethyltrimethylendiisobutyrat |
| Derakane^{®} Momentum 411-200 | Ineos (frühere Ashland) | Vinylesterharz auf Basis von Bisphenol-A-diglycidylether (DGEBA, BADGE) |
| Araldite^{®} LY 556 | Huntsman | Epoxidharz auf Basis von Bisphenol-A-diglycidylether (DGEBA, BADGE) |
| Albidur^{®} HE 600 | Evonik Operations GmbH | Epoxidharz-Härter auf Basis von Hexahydromethylphthalsäureanhydrid (MHHPA) |
| Ancamine^{®} 2167 | Evonik Operations GmbH | Epoxidharz-Härter auf Basis von Aminen |
| ampliTex^{®} 5008 | Bcomp/Schweiz | biaxiales Flachsfasergelege |

### Harz und Faserverbundwerkstoff:

### a) Herstellung des Harzes

Im einem Speedmixer wurde zunächst eine Mischung aus 76 Gewichtsteilen Visiomer^{®} VALMA, 10 Gewichtsteilen Cardanol NX- 2026, 10 Gewichtsteilen HDDA und 4 Gewichtsteilen Aradur^{®} 976-1 hergestellt und diese Mischung anschließend 2 h bei 60 °C getempert. Es wurde ein klares, flüssiges Produkt mit einer Viskosität von 260 mPas (gemessen bei 25 °C) erhalten. Das Produkt war lagerstabil. Auch nach Monaten der Lagerung war das Produkt klar und ließ sich im Infusionsverfahren problemlos weiterverarbeiten.

### b) Aushärtung des Harzes und mechanische Kennwerte

Zu 100 Gewichtsteilen des Produkts a) wurden 2 Gewichtsteile Peroxan BP Pulver 50W und 0,5 Gewichtsteile Pergaquick A3X unter Inertgas (N₂) eingemischt. Die Topfzeit (Verarbeitungszeit) dieser Mischung betrug bei 60 °C ca. 4 h. Die Mischung wurde 6 h bei 60 °C vorgehärtet und anschließend 2 h bei 140 °C nachgehärtet. Das ausgehärtete Produkt hat eine Glasumwandlungstemperatur Tg von ca. 120 °C, einen Elastizitätsmodul von 1,8 GPa und eine Schlagzähigkeit von 1,5 kJ/m2. Die DSC zeigt zwei Peaks, einen für die radikalische Vorhärtung und einen für die nichtradikalische Nachhärtung.

Zum Vergleich: Ein ähnlich gehärtetes Vinylesterharz weist typischerweise eine Glasumwandlungstemperatur von ca. 130 °C und einen Elastizitätsmodul von ca. 3 GPa auf. Vinylesterharze sind zudem sehr spröde. Ein Standardepoxidharz wie DGEBA (z.B. Araldite^{®} LY 556 von Huntsman), gehärtet mit einem Anhydrid (z.B. Albidur^{®} HE 600) hat eine Tg von 130 °C und einen Elastizitätsmodul von 2,8 GPa. Dabei ist anzumerken, dass die Struktur des ausgehärteten erfindungsgemäßen Harzes weder der eines Epoxidharzes noch der eines Vinylesterharz gleicht, insbesondere auch weil sich die Härtungsmechanismen unterscheiden. Entsprechend sind auch unterschiedliche mechanische Eigenschaften zu erwarten.

### c) Herstellung eines Faserverbundwerkstoffes und mechanische Kennwerte

Zu 100 Gewichtsteilen des Produkts a) wurden 2 Gewichtsteile Peroxan BP Pulver 50W und 0,5 Gewichtsteile Pergaquick A3X unter Inertgas (N₂) eingemischt. Die erhaltene Mischung wird im Anschluss mittels Vakuuminfusionsverfahren (VARI) verarbeitet. Als Fasermaterial werden 4 Lagen eines biaxialen Flachsfasergeleges mit einem ±45°-Aufbau (ampliTex^{®} 5008 von Bcomp/Schweiz) und einem Flächengewicht von 350 g/m² eingesetzt. Das erhaltene faserverstärkte Harz wird 4 h bei 60 °C unter Vakuum vorgehärtet und anschließend 6 h bei 140 °C im Ofen nachgehärtet. Der Massenanteil an nachwachsenden Rohstoffen der so erhaltenen Faserverbundplatte liegt bei 93 % bezogen auf die Gesamtmasse des Faserverbundwerkstoffes. Die Faserverbundplatte hat eine Glasumwandlungstemperatur von ca. 120 °C, eine Biegefestigkeit von 137 MPa und einen Biegemodul von 9,8 GPa.

Zum Vergleich: Eine mit dem gleichen Textilgelege (gleicher Produktionsbatch) unter vergleichbaren Bedingungen hergestellte Faserverbundplatte aus Standardepoxidharz (LY 556 von Huntsman) mit einem Amin (Ancamine^{®} 2167 von Evonik), gehärtet für 2 h 80 ° und 4 h 150 °C) weist eine Tg von 108 °C, eine Biegefestigkeit von 160 MPa und einen Biegemodul von 9,4 GPa auf. Für ein juteverstärktes Bauteil auf Basis ungesättigtes Polyesterharz wurde in der Literatur eine Biegefestigkeit von 80 MPa und ein Biegemodul von 4,8 GPa genannt.

*Ersatz von Vanillinmethacrylat durch ein äquimolares Gemisch von Vanillin und Acrylsäure.*

Analog der unter a) beschriebenen Verfahrensweise wurde in einem Speedmixer zunächst eine Mischung aus 52 Gewichtsteilen Vanillin, 24 Gewichtteilen Acrylsäure, 10 Gewichtsteilen Cardanol NX- 2026, 10 Gewichtsteilen HDDA und 4 Gewichtsteilen Aradur^{®} 976-1 hergestellt und diese Zusammensetzung anschließend 2 h bei 60 °C getempert. Das Vanillin ließ sich nicht vollständig lösen. Eine klare Lösung konnte also nicht erhalten werden. Vielmehr handelte es sich bei der erhaltenen Zusammensetzung um eine Suspension. Diese Zusammensetzung war wiederum nicht dazu geeignet, in Infusionsverfahren eingesetzt zu werden, da die Zusammensetzung nicht durch das Gewebe fließen konnte, ohne das feste Bestandteile der Zusammensetzung vom Gewebe zurückgehalten wurden. Nach 4 Stunden Lagerung bei Raumtemperatur setzte sich zudem ein Teil des ungelösten Vanillins am Boden des Aufbewahrungsgefäßes ab.

Es wurde weiterhin versucht, die erhaltene Mischung gemäß der unter b) beschriebenen Verfahrensweise auszuhärten. Eine Härtung bei 60 °C wurde nicht beobachtet. Bei 140 °C kam es zu einer starken Rauchbildung, was vermutlich auf die entweichende und sich möglicherweise zersetzende Acrylsäure zurückzuführen war. Es wurde schließlich ein völlig unbrauchbarer, verkohlter, bröseliger Festkörper enthalten.

## Patentansprüche

1. Zusammensetzung enthaltend
- mindestens ein Aldehyd (A),
- mindestens eine phenolische Verbindung (B) und
- mindestens ein Amin (C), das mindestens zwei Aminogruppen ausgewählt aus der Gruppe bestehend aus primären und sekundären Aminogruppen trägt,
wobei mindestens eine dieser Verbindungen mindestens eine (Meth)acrylatgruppe trägt.

2. Zusammensetzung nach Anspruch 1, **dadurch gekennzeichnet, dass** mindestens eine der Verbindungen (A), (C) und (B) aus nachwachsenden Rohstoffen hergestellt wird oder eine nachwachsender Rohstoff ist.

3. Zusammensetzung nach Anspruch 1 oder 2, **dadurch gekennzeichnet, dass** mindestens ein Aldehyd (A) mindestens eine (Meth)acrylatgruppe trägt.

4. Zusammensetzung nach einem der Ansprüche 1 bis 3, **dadurch gekennzeichnet, dass** mindestens ein Aldehyd (A) aromatisch ist.

5. Zusammensetzung nach einem der Ansprüche 1 bis 4, **dadurch gekennzeichnet, dass** mindestens ein Aldehyd (A) methacryliertes Vanillin ist.

6. Zusammensetzung nach einem der Ansprüche 1 bis 5, **dadurch gekennzeichnet, dass** mindestens eine phenolische Verbindung (B) eine ethylenisch ungesättigte Verbindung ist.

7. Zusammensetzung nach einem der Ansprüche 1 bis 6, **dadurch gekennzeichnet, dass** mindestens eine phenolische Verbindung (B) ein Cardanol ist.

8. Zusammensetzung nach einem der Ansprüche 1 bis 7, **dadurch gekennzeichnet, dass** mindestens ein Amin (C) aromatisch, vorzugsweise ein Dianilin, insbesondere 4,4'-Diaminodiphenylsulfon ist.

9. Zusammensetzung nach einem der Ansprüche 1 bis 8, **dadurch gekennzeichnet, dass** sie zusätzlich mindestens ein (Meth)acrylat (D), vorzugsweise mit mindestens zwei (Meth)acrylatgruppen, insbesondere 1,6-Hexandioldiacrylat enthält.

10. Zusammensetzung nach einem der Ansprüche 1 bis 9, **dadurch gekennzeichnet, dass** sie weiterhin
- mindestens einen Initiator (E), vorzugsweise Benzoylperoxid, und
- optional mindestens einen Beschleuniger (F), vorzugsweise N,N-Diethylanilin, und
- optional mindestens einen weiteren Zusatzstoff (G)
enthält.

11. Zusammensetzung nach einem der Ansprüche 1 bis 10, **dadurch gekennzeichnet, dass** sie, jeweils bezogen auf die Gesamtmasse der Zusammensetzung, folgende Bestandteile enthält oder aus ihnen besteht:
- ein oder mehrere Aldehyd(e) (A) in einem Massenanteil von insgesamt 60% bis 90%, vorzugsweise 65% bis 85%, insbesondere 70% bis 80%;
- eine oder mehrere phenolische Verbindung(en) (B) in einem Massenanteil von insgesamt 1% bis 25%, vorzugsweise 3% bis 20%, insbesondere 5% bis 15%;
- ein oder mehrere Amin(e) (C) in einem Massenanteil von insgesamt 1% bis 20%, vorzugsweise von 2% bis 10%, insbesondere von 3% bis 5%;
- ein oder mehrere (Meth)acrylat(e) (D) in einem Massenanteil von insgesamt 1% bis 25%, vorzugsweise 3% bis 20%, insbesondere 5% bis 15%;
- ein oder mehrere Initiator(en) (E) in einem Massenanteil von insgesamt 0,1% bis 5%, vorzugsweise von 0,2% bis 4%, insbesondere von 0,3% bis 1%;
- ein oder mehrere Beschleuniger (F) in einem Massenanteil von insgesamt 0% bis 10%, vorzugsweise von 0,01% bis 5%, insbesondere von 0,02% bis 2%;
- ein oder mehrere Zusatzstoff(e) (G) in einem Massenanteil von insgesamt 0% bis 10%, vorzugsweise von 0,01% bis 5%, insbesondere von 0,02% bis 2%.

12. Faserverstärkte Zusammensetzung enthaltend
- mindestens ein Fasermaterial, vorzugsweise aus einem oder mehreren nachwachsenden Rohstoff(en), und
- eine Zusammensetzung nach einem der Ansprüche 1 bis 11.

13. Verfahren zur Aushärtung einer Zusammensetzung nach einem der Ansprüche 1 bis 11 oder einer faserverstärkten Zusammensetzung nach Anspruch 12, **dadurch gekennzeichnet, dass** die Aushärtung über einen radikalischen und einen nichtradikalischen Härtungsmechanismus erfolgt und vorzugsweise folgende Schritte umfasst:
(i) eine thermische Vorhärtung bei einer Temperatur von 40 °C bis 100 °C, insbesondere über einen Zeitraum von 1 h bis 8 h, und/oder eine photochemische Vorhärtung durch aktinische Strahlung, insbesondere UV-Licht;
(ii) eine thermische Nachhärtung bei einer Temperatur von >100 °C bis 200 °C, insbesondere über einen Zeitraum von 1 h bis 8 h.

14. Verfahren nach Anspruch 13, **dadurch gekennzeichnet, dass** es sich um ein Injektionsverfahren oder ein Infusionsverfahren handelt.

15. Faserverbundwerkstoff bzw. Duroplast erhältlich durch ein Verfahren nach einem der Ansprüche 13 bis 14.

## Claims

1. Composition comprising
- at least one aldehyde (A),
- at least one phenolic compound (B) and
- at least one amine (C) bearing at least two amino groups selected from the group consisting of primary and secondary amino groups,
wherein at least one of these compounds bears at least one (meth)acrylate group.

2. Composition according to Claim 1, **characterized in that** at least one of the compounds (A), (C) and (B) is produced from renewable raw materials or is a renewable raw material.

3. Composition according to Claim 1 or 2, **characterized in that** at least one aldehyde (A) bears at least one (meth)acrylate group.

4. Composition according to any of Claims 1 to 3, **characterized in that** at least one aldehyde (A) is aromatic.

5. Composition according to any of Claims 1 to 4, **characterized in that** at least one aldehyde (A) is methacrylated vanillin.

6. Composition according to any of Claims 1 to 5, **characterized in that** at least one phenolic compound (B) is an ethylenically unsaturated compound.

7. Composition according to any of Claims 1 to 6, **characterized in that** at least one phenolic compound (B) is a cardanol.

8. Composition according to any of Claims 1 to 7, **characterized in that** at least one amine (C) is aromatic, preferably a dianiline, in particular 4,4'-diaminodiphenylsulfone.

9. Composition according to any of Claims 1 to 8, **characterized in that** it additionally comprises at least one (meth)acrylate (D), preferably having at least two (meth)acrylate groups, in particular 1,6-hexanediol diacrylate.

10. Composition according to any of Claims 1 to 9, **characterized in that** it further comprises
- at least one initiator (E), preferably benzoyl peroxide, and
- optionally at least one accelerator (F), preferably N,N-diethylaniline, and
- optionally at least one further additive (G).

11. Composition according to any of Claims 1 to 10, **characterized in that** it contains or consists of the following constituents in each case based on the total mass of the composition:
- one or more aldehydes (A) in a mass fraction of altogether 60% to 90%, preferably 65% to 85%, in particular 70% to 80%;
- one or more phenolic compounds (B) in a mass fraction of altogether 1% to 25%, preferably 3% to 20%, in particular 5% to 15%;
- one or more amines (C) in a mass fraction of altogether 1% to 20%, preferably of 2% to 10%, in particular of 3% to 5%;
- one or more (meth)acrylates (D) in a mass fraction of altogether 1% to 25%, preferably 3% to 20%, in particular 5% to 15%;
- one or more initiators (E) in a mass fraction of altogether 0.1% to 5%, preferably of 0.2% to 4%, in particular of 0.3% to 1%;
- one or more accelerators (F) in a mass fraction of altogether 0% to 10%, preferably of 0.01% to 5%, in particular of 0.02% to 2%;
- one or more additives (G) in a mass fraction of altogether 0% to 10%, preferably of 0.01% to 5%, in particular of 0.02% to 2%.

12. Fibre-reinforced composition comprising
- at least one fibre material, preferably composed of one or more renewable raw materials, and
- a composition according to any of Claims 1 to 11.

13. Process for curing a composition according to any of Claims 1 to 11 or a fibre-reinforced composition according to Claim 12, **characterized in that** the curing is effected via a radical and a non-radical curing mechanism and preferably comprises the steps of:
(i) a thermal pre-curing at a temperature of 40°C to 100°C, in particular over a period of 1 h to 8 h, and/or a photochemical pre-curing via actinic radiation, in particular UV light;
(ii) a thermal post-curing at a temperature of >100°C to 200°C, in particular over a period of 1 h to 8 h.

14. Process according to Claim 13, **characterized in that** it is an injection process or an infusion process.

15. Fibre composite material/thermoset obtainable by a process according to either of Claims 13 and 14.

## Revendications

1. Composition contenant
- au moins un aldéhyde (A),
- au moins un composé phénolique (B) et
- au moins une amine (C), qui porte au moins deux groupes amino choisis dans le groupe constitué par les groupes amino primaire et secondaire,
au moins l'un de ces composés portant au moins un groupe (méth)acrylate.

2. Composition selon la revendication 1, **caractérisée en ce qu'**au moins l'un des composés (A), (C) et (B) est préparé à partir de matières premières renouvelables ou est une matière première renouvelable.

3. Composition selon la revendication 1 ou 2, **caractérisée en ce qu'**au moins un aldéhyde (A) porte au moins un groupe (méth)acrylate.

4. Composition selon l'une des revendications 1 à 3, **caractérisée en ce qu'**au moins un aldéhyde (A) est aromatique.

5. Composition selon l'une des revendications 1 à 4, **caractérisée en ce qu'**au moins un aldéhyde (A) est une vanilline méthacrylée.

6. Composition selon l'une des revendications 1 à 5, **caractérisée en ce qu'**au moins un composé phénolique (B) est un composé éthyléniquement insaturé.

7. Composition selon l'une des revendications 1 à 6, **caractérisée en ce qu'**au moins un composé phénolique (B) est un cardanol.

8. Composition selon l'une des revendications 1 à 7, **caractérisée en ce qu'**au moins une amine (C) est aromatique, de préférence une dianiline, en particulier une 4,4'-diaminodiphénylsulfone.

9. Composition selon l'une des revendications 1 à 8, **caractérisée en ce qu'**elle contient en outre au moins un (méth)acrylate (D), présentant de préférence au moins deux groupes (méth)acrylate, en particulier du diacrylate de 1,6-hexanediol.

10. Composition selon l'une des revendications 1 à 9, **caractérisée en ce qu'**elle contient en outre
- au moins un initiateur (E), de préférence du peroxyde de benzoyle et
- éventuellement au moins un accélérateur (F), de préférence de la N,N-diéthylaniline et
- éventuellement au moins un autre additif (G).

11. Composition selon l'une des revendications 1 à 10, **caractérisée en ce que**, à chaque fois par rapport à la masse totale de la composition, elle contient les constituants suivants ou est constituée par ceux-ci :
- un ou plusieurs aldéhyde(s) (A) en une proportion massique totale de 60% à 90%, de préférence de 65% à 85%, en particulier de 70% à 80% ;
- un ou plusieurs composés(s) phénolique(s) (B) en une proportion massique totale de 1% à 25%, de préférence de 3% à 20%, en particulier de 5% à 15% ;
- une ou plusieurs amine(s) (C) en une proportion massique totale de 1% à 20%, de préférence de 2% à 10%, en particulier de 3% à 5% ;
- un ou plusieurs (méth)acrylate(s) (D) en une proportion massique totale de 1% à 25%, de préférence de 3% à 20%, en particulier de 5% à 15% ;
- un ou plusieurs initiateur(s) (E) en une proportion massique totale de 0,1% à 5%, de préférence de 0,2% à 4%, en particulier de 0,3% à 1% ;
- un ou plusieurs accélérateur(s) (F) en une proportion massique totale de 0% à 10%, de préférence de 0,01% à 5%, en particulier de 0,02% à 2% ;
- un ou plusieurs additif(s) (G) en une proportion massique totale de 0% à 10%, de préférence de 0,01% à 5%, en particulier de 0,02% à 2%.

12. Composition renforcée par des fibres, contenant
- au moins un matériau fibreux, de préférence constitué par une ou plusieurs matière(s) première(s) renouvelable(s) et
- une composition selon l'une des revendications 1 à 11.

13. Procédé de durcissement d'une composition selon l'une des revendications 1 à 11 ou d'une composition renforcée par des fibres selon la revendication 12, **caractérisé en ce que** le durcissement s'effectue par l'intermédiaire d'un mécanisme de durcissement radicalaire et d'un mécanisme de durcissement non radicalaire et comprend de préférence les étapes suivantes :
(i) un prédurcissement thermique à une température de 40°C à 100°C, en particulier sur une durée de 1 h à 8 h, et/ou un prédurcissement photochimique par un rayonnement actinique, en particulier une lumière UV ;
(ii) un postdurcissement thermique à une température de >100°C à 200°C, en particulier sur une durée de 1 h à 8 h.

14. Procédé selon la revendication 13, **caractérisé en ce qu'**il s'agit d'un procédé d'injection ou d'un procédé d'infusion.

15. Matériau composite fibreux ou matériau thermodurcissable pouvant être obtenu par un procédé selon l'une des revendications 13 à 14.
